# EUROPÄISCHE PATENTSCHRIFT

(11) **EP 1 554 161 B1**
(45) Veröffentlichungstag und Bekanntmachung des Hinweises auf die Patenterteilung: **10.05.2006**
(21) Anmeldenummer: 03711829.6
(22) Anmeldetag: 20.02.2003
(51) Int. Cl.: B60R 21/01

(54) **SCHUTZEINRICHTUNG IN EINEM FAHRZEUG**
PROTECTIVE DEVICE IN A MOTOR VEHICLE
DISPOSITIF DE PROTECTION MIS EN PLACE DANS UN VEHICULE

(30) Priorität: 30.07.2002 DE 10234592
(43) Veröffentlichungstag der Anmeldung: 20.07.2005
(73) Patentinhaber: ROBERT BOSCH GMBH, 70442 Stuttgart (DE)
(72) Erfinder: LICH, Thomas, 71409 Schwaikheim (DE)
(86) Internationale Anmeldenummer: PCT/DE2003/000522
(87) Internationale Veröffentlichungsnummer: WO 2004/016474

(56) Entgegenhaltungen:
- DE-A- 19 856 364
- DE-A- 19 900 395
- US-A- 3 868 126
- US-A1- 2001 052 730

## Beschreibung

### Stand der Technik

Die Erfindung geht aus von einer Schutzvorrichtung in einem Fahrzeug nach der Gattung des unabhängigen Patentanspruchs.

Aus DE 198 56 364 A1 ist ein Gurtaufroller für einen Fahrzeugsicherheitsgurt bekannt, wobei dieser Gurt bei einem Sekundäraufprall gespannt werden soll. Aus US 3 868 126 ist es bekannt, bei einem Folgeaufprall eine weitere Gasladung zu zünden, um den Airbag nochmals aufzublähen. Aus US 2 001/0052730 A1 ist es bekannt, bei einem Folgeaufprall einen Airbag auszulösen der gattungsgemässen. Aus DE 199 00 395 A1 ist es bekannt, eine zweite Sprengkapsel zu zünden, wenn ein zweiter Unfall auftritt. Diese zweite Sprengkapsel führt ebenfalls zu einem Aufblähen von Airbags.

Es ist bekannt, dass nach einem Unfall, nach dem die Rückhaltemittel eines Rückhaltesystems, wie Airbag und Gurtstraffer, bereits eingesetzt wurden, weitere Schutzmittel zur Verfügung stehen, um vor weiteren Unfällen, wie beispielsweise einem Auffahrunfall, zu schützen. Es ist also ein Schutz nach dem Unfall vorgesehen. Dabei wird von der Schutzvorrichtung überwacht, ob ein Unfall stattgefunden hat, und zwar durch ein Signal, das von der Aktuatorik des Rückhaltesystems zu der Schutzvorrichtung übertragen wird.

### Vorteile der Erfindung

Es ist von Vorteil, dass die Schutzvorrichtung zusätzlich eine Aktuatorik aufweist, die derart ansteuerbar ist, dass sie nach dem ersten Unfall aktivierbar ist. Zu dieser zusätzlichen Aktuatorik gehört eine reversibel ausfahrbare Heckstoßstange oder eine Nachjustierung der Kopfstütze.

Durch die in den abhängigen Ansprüchen aufgeführten Maßnahmen und Weiterbildungen sind vorteilhafte Verbesserungen der im unabhängigen Patentanspruch angegebenen Schutzvorrichtung möglich.

Besonders vorteilhaft ist, dass die Schutzvorrichtung derart mit dem Rückhaltesystem koppelbar ist, dass aktivierbare Komponenten, vorzugsweise Airbags und Gurtstraffer, durch die Schutzvorrichtung ansteuerbar sind, wobei eine Sensorik des Rückhaltesystems mit der Schutzvorrichtung verbunden ist, um auch diese der erfindungsgemäßen Schutzvorrichtung zugänglich zu machen. Insbesondere ist es dadurch möglich, dass noch nicht eingesetzte Airbags durch die Schutzvorrichtung eingesetzt werden können. Da Airbags im Allgemeinen situationsgesteuert gezündet werden, ist dies von Vorteil, da ein Unfall nach einem ersten Unfall im Allgemeinen durch andere Parameter charakterisiert ist, als dieser erste Unfall.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Schutzvorrichtung und
- Figur 2: ein Flussdiagramm.

### Beschreibung

Bezüglich des Insassenschutzes existiert eine Vielzahl von Vorrichtungen, die ermöglichen, dass die Insassen vor und während eines Unfalls geschützt werden können. Gleichfalls sind Notruffunktionen an ein Krankenhaus, eine zentrale Leitstelle u.s.w. bekannt.

Nachteilig daran ist, dass nach einem Unfall für die Insassen kein weiterer Schutz geboten wird. Insbesondere Auffahrunfälle können somit die Situation verschlimmern.

Gemäß dem Stand der Technik wird eine Schutzvorrichtung vorgeschlagen, die erst nach einem ersten Unfall aktivierbar ist. Dies erkennt die Schutzvorrichtung durch ein Signal von der Aktuatorik des Rückhaltesystems. Der Schutzvorrichtung sind eigene Rückhaltemittel zugeordnet, aber sie kann auch auf noch einsetzbare Rückhaltemittel des Rückhaltesystems selbst zugreifen. Auch die Sensorik des Rückhaltesystems ist dieser Schutzvorrichtung zugänglich. Die Sensorsignale der Sensorik werden demnach zur Schutzvorrichtung übertragen. Damit ist es nämlich der Schutzvorrichtung möglich, einen weiteren Unfall nach dem ersten Unfall frühzeitig mit dieser Sensorik zu erkennen. Dabei muss sicher gestellt sein, dass auch bei einer teilweise zerstörten Sensorik die noch lebende Sensorik weiterhin Signale liefert.

Auch bei den Rückhaltemitteln kann einerseits die erfindungsgemäße Schutzvorrichtung von dem Rückhaltesystem noch einsetzbare Rückhaltemittel, wie Airbags und Gurtstraffer einsetzen, und andererseits nur dieser Schutzvorrichtung zugeordnete Rückhaltemittel, wie weitere Airbags oder erfindungsgemäß eine reversibel ausfahrbare Heckstoßstange oder eine nachjustierbare Kopfstütze. Dies ist insbesondere für den Heckaufprall relevant. Zusammenfassend ist es also möglich, nach einem ersten Unfall durch die erfindungsgemäße Schutzvorrichtung vorhandene Rückhaltemittel erneut oder zum ersten Mal bei einem möglichen Unfall scharf zu schalten. Insbesondere, wenn Mittel zur Rundumsicht wie Video, Radar oder Ultraschall vorhanden sind, können solche Schutzmittel bereits frühzeitig angewendet werden.

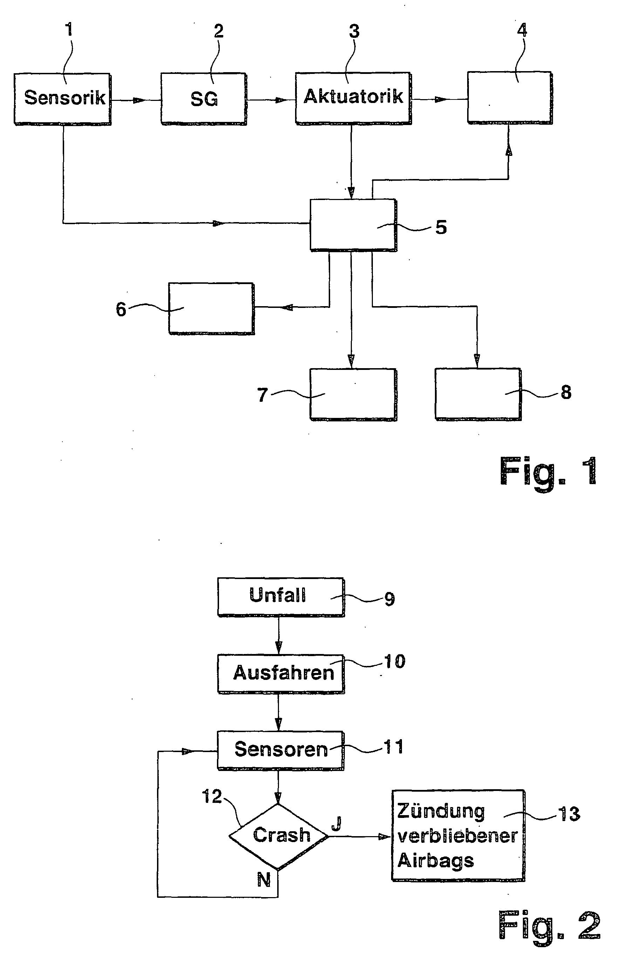

Figur 1 zeigt als Blockschaltbild die erfindungsgemäße Schutzvorrichtung in Verbindung mit einem Rückhaltesystem. Eine Sensorik 1 ist über einen ersten Ausgang mit einem Steuergerät 2 verbunden. Über einen zweiten Ausgang ist die Sensorik 1 mit einer Steuerung 5 der erfindungsgemäßen Schutzvorrichtung verbunden. Das Steuergerät 2 des Rückhaltesystems ist über einen Ausgang mit einer Aktuatorik 3 verbunden, die über einen ersten Ausgang Rückhaltemittel 4 ansteuert. Über einen zweiten Ausgang ist die Aktuatorik 3 mit der Ansteuerung 5 verbunden. Die Ansteuerung 5 ist ihrerseits über einen ersten Ausgang mit den Rückhaltemitteln 4 verbunden und über einen zweiten Ausgang mit einer reversibel ausfahrbaren Heckstoßstange 6 über einen dritten Ausgang mit einer nachjustierbaren Kopfstütze 7 und über einen vierten Ausgang mit zusätzlichen Airbags 8.

Die Sensorik 1 setzt sich einerseits zusammen aus Precrashsensoren wie Radar, Video oder Ultraschall und andererseits aus Aufprallsensoren wie Verformungssensoren und/oder Beschleunigungssensoren. Es ist möglich, dass keine Precrashsensorik vorliegt.

Weiterhin ist auch der Einsatz von lediglich Beschleunigungssensoren denkbar. Es sind alle Kombinationen von Sensortypen hier einsetzbar.

Die Sensorsignale werden über einen Bus oder entsprechende Einzelverbindungen zu dem Steuergerät 2 und der Ansteuerung 5 übertragen. Das Steuergerät 2 steuert in Abhängigkeit von diesen Sensorsignalen die Aktuatorik 3 an. Die Aktuatorik 3 löst bei einer Ansteuerung durch das Steuergerät 2 die Rückhaltemittel 4 aus. Bei den Rückhaltemitteln 4 handelt es sich um Gurtstraffer bzw. Airbags. Nicht dargestellt ist hier eine Insassenerkennung, die das Steuergerät 2 ebenfalls zur Ansteuerung der Aktuatorik 3 verwendet, um nur die notwendigen Rückhaltemittel auszulösen. Damit wird gewährleistet, dass nur Sitzplätze im Fahrzeug, die auch durch Insassen besetzt sind, mit Rückhaltemitteln geschützt werden. Gegebenenfalls ist es möglich, eine gefährliche Position des Insassen zu erkennen oder eine Person zu identifizieren, die einen Einsatz von Rückhaltemitteln als gefährlich erscheinen lassen und damit verbieten. Insbesondere Kinder und andere Personen, die beispielsweise unter 45 Kilogramm wiegen, sollen nicht durch Airbags bei einem Aufprall geschützt werden, da die Rückhaltekraft des Airbags diese Personen verletzen kann.

Bei einer Auslösung überträgt die Aktuatorik 3 an die Ansteuerung 5 das Signal, dass solche Rückhaltemittel 4 ausgelöst wurden. Damit erkennt die Ansteuerung 5, dass ein erster Unfall vorliegt. Nun tritt die Funktion der erfindungsgemäßen Schutzvorrichtung in Kraft. Denn die erfindungsgemäße Schutzvorrichtung, bestehend aus der Ansteuerung 5 und den Rückhaltemitteln 6, 7 und 8 sowie den angeschlossenen Sensoren 1 und den Rückhaltemitteln 4, soll einen weiteren Schutz auch nach diesem ersten Unfall bieten. Dazu verwendet die Ansteuerung 5 in Abhängigkeit von Sensorsignalen von der Sensorik 1 die Rückhaltemittel 4, 6, 7 und 8. Sind die Sensoren aufgrund des ersten Unfalls ausgefallen, steuert die Ansteuerung 5 lediglich die reversibel ausfahrbare Heckstoßstange 6 aus.

Bei den anderen Rückhaltemitteln würde ein blindes Ansteuern gegebenenfalls zu weiteren Verletzungen führen. Die Ansteuerung 5 verfügt über eine Auswerteeinheit, also einen Prozessor und über die notwendige Aktuatorik, um die Rückhaltemittel 4, 6, 7 und 8 anzusteuern. Die Ansteuerung 5 kann im selben Gehäuse wie das Steuergerät 2 angeordnet sein, es ist jedoch möglich, diese auch getrennt anzuordnen.

Figur 2 zeigt als Flussdiagramm den Ablauf beim Einsatz der erfindungsgemäßen Schutzvorrichtung. In Verfahrensschritt 9 erkennt die Ansteuerung 5 durch ein Signal von der Aktuatorik 3, dass ein erster Unfall vorliegt, da die Rückhaltemittel 4 ausgelöst wurden. In diesem Fall fährt die Ansteuerung 5 die reversibel ausfahrbare Heckstoßstange 6 in Verfahrensschritt 10 aus, um einen Schutz für einen Heckaufprall zu bieten. Dies kann alternativ auch in Abhängigkeit von Precrashsensorsignalen erfolgen. Um auch die übrigen Rückhaltemittel anzusteuern, werden in Verfahrensschritt 11 die Sensorsignale ausgewertet. Sind durch den ersten Unfall die Sensorsignale nicht mehr vorhanden, dann erfolgt ein Abbruch des Verfahrens. Liefern jedoch die Sensoren im Verfahrensschritt 11 die Sensorsignale, dann wird in Verfahrensschritt 12 überprüft, ob ein Crash vorliegt. Dazu führt auch die Ansteuerung 5 einen Auslösealgorithmus wie das Steuergerät 2 durch. Ist das der Fall, dann wird in Verfahrensschritt 13 eine Zündung der verbliebenen Airbags vorgenommen. Auch andere Rückhaltemittel, wie das Nachjustieren der Kopfstützen, kann in Verfahrensschritt 13 oder auch schon in Verfahrensschritt 11 erfolgen, um vor einem Heckaufprall zu schützen. Liegt kein Crash vor, dann werden weiterhin die Sensorsignale in Verfahrensschritt 11 überwacht. Das in Figur 2 dargestellte Verfahren kann auch nach Verfahrensschritt 10 abgebrochen werden, wenn keine Rückhaltemittel mehr zur Verfügung stehen, dies kann daher kommen, dass die Rückhaltemittel entweder alle eingesetzt wurden und/oder durch den ersten Unfall unbrauchbar gemacht wurden.

Es ist möglich, dass die Ansteuerung 5 und das Steuergerät 2 auf dem gleichen Prozessor realisiert werden.

## Patentansprüche

1. Schutzvorrichtung in einem Fahrzeug, die derart ausgebildet ist, dass die Schutzvorrichtung (5 bis 8) nach einem ersten Unfall zum Schutz vor weiteren Unfällen aktivierbar ist, wobei die Schutzvorrichtung (5 bis 8) eine zusätzliche Aktuatorik aufweist, die derart ansteuerbar ist, dass sie nach einem ersten Unfall aktivierbar ist, **dadurch gekennzeichnet, dass** die zusätzliche Aktuatorik eine reversibel ausfahrbare Heckstoßstange (6) aufweist und/oder dass die zusätzliche Aktuatorik derart konfiguriert ist, dass wenigstens eine Kopfstütze (7) nachjustierbar ist.

2. Schutzvorrichtung nach Anspruch 1, **dadurch gekennzeichnet, dass** die Schutzvorrichtung (5 bis 8) mit einem Rückhaltesystem (1 bis 4) derart verbunden ist, dass der Schutzvorrichtung (5 bis 8) ein Signal zur Anzeige eines Unfalls übermittelbar ist.

3. Schutzvorrichtung nach Anspruch 1 oder 2, **dadurch gekennzeichnet, dass** die Schutzvorrichtung (5 bis 8) derart mit dem Rückhaltesystem (1 bis 4) koppelbar ist, dass aktivierbare Komponenten (4, 6 bis 8), vorzugsweise Airbags und Gurtstraffer, durch die Schutzvorrichtung (5) ansteuerbar sind, wobei eine Sensorik (1) des Rückhaltesystems (1 bis 4) mit der Schutzvorrichtung (5) verbindbar ist.

4. Schutzvorrichtung nach Anspruch 1, **dadurch gekennzeichnet, dass** wenigstens ein allein der Schutzvorrichtung zugeordneter Airbag (8) vorgesehen ist, der nach dem ersten Unfall einsetzbar ist.

## Claims

1. Protective device in a vehicle which is embodied in such a way that the protective device (5 to 8) can be activated after a first accident in order to protect against further accidents, the protective device (5 to 8) having an additional actuator system which can be actuated in such a way that it can be activated after a first accident, **characterized in that** the additional actuator system has a reversibly extendable rear bumper (6), and/or **in that** the additional actuator system is configured in such a way that at least one headrest (7) can be readjusted.

2. Protective device according to Claim 1, **characterized in that** the protective device (5 to 8) is connected to a restraint system (1 to 4) in such a way that a signal for displaying an accident can be transmitted to the protective device (5 to 8).

3. Protective device according to Claim 1 or 2, **characterized in that** the protective device (5 to 8) can be coupled to the restraint system (1 to 4) in such a way that activatable components (4, 6 to 8), preferably airbags and seatbelt pretensioners, can be actuated by the protective device (5), it being possible to connect a sensor system (1) of the restraint system (1 to 4) to the protective device (5).

4. Protective device according to Claim 1, **characterized in that** at least one airbag (8) which is assigned solely to the protective device and which can be used after the first accident is provided.

## Revendications

1. Dispositif de protection mis en place dans un véhicule conçu pour que le dispositif de protection (5 à 8) soit activable à la suite d'un premier accident pour protéger d'autres accidents, le dispositif de protection (5 à 8) présentant un système d'actionnement supplémentaire commandé pour être activable à la suite d'un premier accident,
**caractérisé en ce que**
le système d'actionnement supplémentaire présente un pare-chocs arrière (6) extractible de façon réversible et/ou le système d'actionnement supplémentaire est configuré de telle sorte qu'au moins un appui-tête (7) est réajustable.

2. Dispositif de protection selon la revendication 1,
**caractérisé en ce que**
le dispositif de protection (5 à 8) comportant un système de retenue (1 à 4) est connecté pour qu'un signal indicatif d'un accident puisse être transmis au dispositif de protection (5 à 8).

3. Dispositif de protection selon la revendication 1 ou 2,
**caractérisé en ce que**
le dispositif de protection (5 à 8) peut se coupler avec le système de retenue (1 à 4) de telle sorte que des composants activables (4, 6 à 8), de préférence des coussins gonflables et des prétensionneurs de ceintures de sécurité, soient commandables par le dispositif de protection (5), un système de capteur (1) du système de retenue (1 à 4) pouvant être connecté au dispositif de protection (5).

4. Dispositif de protection selon la revendication 1,
**caractérisé en ce qu'**
au moins un coussin gonflable (8) associé uniquement au dispositif de protection est utilisable après un premier accident.
